Europäisches Patentamt

European Patent Office

Office européen des brevets

(11) Veröffentlichungsnummer: **0 362 383**
A1

## EUROPÄISCHE PATENTANMELDUNG
### veröffentlicht nach Art. 158 Abs. 3 EPÜ

(21) Anmeldenummer: 88906217.0

(22) Anmeldetag: 22.03.88

(86) Internationale Anmeldenummer:
PCT/SU88/00064

(87) Internationale Veröffentlichungsnummer:
WO 89/09111 (05.10.89 89/24)

(51) Int. Cl.5: **B23P 15/26**

(43) Veröffentlichungstag der Anmeldung:
**11.04.90 Patentblatt 90/15**

(84) Benannte Vertragsstaaten:
**AT BE CH DE FR GB IT LI LU NL SE**

(71) Anmelder: **BELORUSSKY POLITEKHNICHESKY INSTITUT**
**Leninksy pr., 65**
**Minsk, 220027(SU)**

(72) Erfinder: **DYAKOV, Igor Ivanovich**
**2 per. Bagrationa, 19-419**
**Minsk, 220037(SU)**
Erfinder: **KONEV, Sergei Vladimirovich**
**ul. Polevaya, 25a-8**
**Minsk, 220003(SU)**
Erfinder: **MEDVEDEV, Vladimir Borisovich**
**pr. Leninsky, 18-29**
**Minsk, 220050(SU)**
Erfinder: **YAKIMOVICH, Alexandr Maximovich**
**ul. Russiyanova, 32-1-94**
**Minsk, 220067(SU)**

(74) Vertreter: **Patentanwälte Zellentin & Partner**
**Zweibrückenstrasse 15**
**D-8000 München 2(DE)**

(54) **HERSTELLUNGSVERFAHREN FÜR EIN ROHRFÖRMIGES ELEMENT MIT QUERRIPPEN FÜR WÄRMEAUSTAUSCHER.**

(57) Das Verfahren zur Herstellung eines Rohrelements mit Querrippen für einen Wärmeaustauscher besteht darin, daß in einen röhrenförmigen Rohling (1) Rillen unter Bildung von Vorsprüngen (3) geschnitten werden, dann der röhrenförmige Rohling (1) in Drehung versetzt wird und die an seiner Oberfläche befindliche Metallschicht mittels eines Schneidwerkzeugs (4) unterschnitten und gleichzeitig zur Bildung von Rippen (5) an dem röhrenförmigen Rohling (1) abgebogen wird, wobei die Schneidkante des Schneidwerkzeugs (4) schräg zur Achse des röhrenförmigen Rohlings (1) angestellt wird und die Rillen (2) in den röhrenförmigen Rohling (1) entlang einer Schraubenlinie geschnitten werden und die Schneidkante des Schneidwerkzeugs (4) in die der Neigungsrichtung der Schraubenlinie der Rillen (2) entgegengesetzte Richtung geneigt wird.

EP 0 362 383 A1

# VERFAHREN ZUR HERSTELLUNG EINES ROHRELEMENTS MIT QUERRIPPEN FÜR EINEN WÄRMEAUSTAUSCHER

## Gebiet der Technik

Die Erfindung bezieht sich auf spanabhebende Metallbearbeitungsverfahren und betrifft insbesondere ein Verfahren zur Herstellung eines Rohrelements mit Querrippen für einen Wärmeaustauscher.

## Stand der Technik

Es ist ein Verfahren zur Herstellung eines Rohrelements mit Querrippen an der Innenfläche für einen Wärmeaustauscher (FR, B, 2335282) bekannt, welches darin besteht, daß Rippen durch Unterschneiden und Abbiegen der Metallschichten an der zylindrischen Innenfläche eines rotierenden röhrenförmigen Rohlings mittels eines Schneidwerkzeugs erzeugt werden, das radial zur Oberfläche dieses Rohlings angestellt und entlang seiner Achse fortschreitend verlagert wird. Zur Durchführung des Verfahrens wird ein zylinderförmiges Werkzeug mit Abschrägung eingesetzt.

Ein Nachteil dieses Verfahrens besteht in der Unmöglichkeit, Wirkflächen der Rohrelemente für Wärmeaustauscher mit hohen wärmetechnischen Charakteristiken infolge einer beschränkten Höhe und eines großen Schrumpfes der unterschnittenen Rippen zu erzeugen.

Es ist ein Verfahren zur Herstellung eines Rohrelements mit Querrippen für Wärmeaustauscher (JP, A, 49--37949) bekannt, welches darin besteht, daß Rippen an einem rotierenden röhrenförmigen Rohling erzeugt werden, der gerade verlaufende Trennrillen entlang seiner Achse aufweist, durch die an dem Rohling Vorsprünge gebildet werden. Eine Metallschicht wird mittels eines Schneidwerkzeugs unterschnitten und abgebogen, das sich entlang der Achse des röhrenförmigen Rohlings fortschreitend bewegt, wobei die Unterschnittiefe an seiner Außenfläche vom vorderen Ende der Werkzeugschneidkante zu ihrem hinteren Ende hin zunimmt, wodurch an der Oberfläche des röhrenförmigen Rohlings Vorsprünge entstehen, die sich entlang seiner Achse zu gerade verlaufenden Reihen gruppieren.

EP 0 362 383 A1

Jedoch wird durch die geradlinige Anordnung der Rippenreihen entlang der Achse des röhrenförmigen Elements eine wirksame Verwirbelung des Stroms des abzukühlenden Mediums nicht erzielt, das mit den Rippen des röhrenförmigen Elements zusammenwirkt. Außerdem wird beim Strömen des abzukühlenden Mediums entlang der Achse des Rohrelements eine hohe Wärmeübertragung nicht gewährleistet, weil der Hauptstrom des abzukühlenden Mediums entlang der gerade verlaufenden Rippenreihen fließt und nur eine unbedeutende Menge davon in den Raum zwischen den Rippen gelangt. Beim Unterschneiden der Rippen auf den gerade verlaufenden Vorsprüngen kommt ein bedeutender Schrumpf der Rippen, d.h., eine Verringerung der Rippenstärke im Vergleich zur Breite der unterschnittenen Schicht zustande, wodurch die Bindefestigkeit/Verbindung zwischen den unterschnittenen Rippen und dem Grundmetall des röhrenförmigen Rohrelements herabgesetzt wird und ebenfalls die Wärmeübertragungseigenschaften des Rohrelements für den Wärmeaustauscher verschlechtert werden.

Offenbarung der Erfindung

Der Erfindung liegt die Aufgabe zugrunde, ein Verfahren zur Herstellung eines Rohrelements mit Querrippen für einen Wärmeaustauscher zu schaffen, bei dem in der Metallschicht ein minimaler Schrumpf erzielt und eine Wirkfläche mit hohen wärmetechnischen Charakteristiken erzeugt wird.

Die gestellte Aufgabe wird dadurch gelöst, daß in einem Verfahren zur Herstellung eines Rohrelements mit Querrippen für einen Wärmeaustauscher, welches darin besteht, daß in einem röhrenförmigen Rohling Rillen unter Bildung von Vorsprüngen geschnitten werden, dann der röhrenförmige Rohling in Drehung versetzt und die Metallschicht an seiner Oberfläche mittels eines Schneidwerkzeugs unterschnitten und gleichzeitig zur Bildung von Rippen an dem röhrenförmigen Rohling abgebogen wird, wobei die Schneidkante des Schneidwerkzeugs schräg zur

Achse des röhrenförmigen Rohlings angestellt wird, erfindungsgemäß die Rillen in den röhrenförmigen Rohling entlang einer Schraubenlinie geschnitten werden und die Schneidkante des Schneidwerkzeugs in die der Neigungsrichtung der Schraubenlinie der Rillen entgegengesetzte Richtung geneigt wird.

Durch das erfindungsgemäße Verfahren zur Herstellung eines Rohrelements mit Querrippen für einen Wärmeaustauscher werden die/Bedingungen für das Unterschneiden der Querrippen mit dem Schneidwerkzeug verbessert, wodurch ein minimaler Schrumpf der unterschnittenen Metallschicht erzielt, die Bindefestigkeit zwischen den unterschnittenen Rippen und dem Grundmetall des Rohrelements erhöht und die wärmetechnischen Charakteristiken, d.h., der Wärmewiderstand des erfindungsgemäß hergestellten Rohrelements mit Querrippen für einen Wärmeaustauscher verbessert werden.

## Beschreibung

Nachstehend wird die Erfindung an Hand konkreter Durchführungsbeispiele unter Bezugnahme auf eine Zeichnung erläutert, in der ein erfindungsgemäß hergestelltes Rohrelement mit Querrippen für einen Wärmeaustauscher dargestellt ist.

## Bevorzugte Ausführungsvariante der Erfindung

Das Verfahren zur Herstellung eines Rohrelements mit Querrippen für einen Wärmeaustauscher besteht darin, daß in einen röhrenförmigen Rohling 1 Rillen 2 entlang einer Schraubenlinie unter Bildung von Vorsprüngen 3 vorgeschnitten werden. Dann wird der röhrenförmige Rohling 1 in Drehung versetzt und die Metallschichten der Vorsprünge 3 werden werden mittels eines sich entlang seiner Achse fortschreitend bewegenden Schneidwerkzeugs 4 unterschnitten und gleichzeitig unter Bildung von Rippen 5 an dem röhrenförmigen Rohling 1 abgebogen, wobei die Schneidkante des Schneidwerkzeugs 4 relativ zur Achse des röhrenförmigen Rohlings 1 in die der Neigungsrichtung der Schraubenlinie der Rillen 2 entgegengesetzte Richtung geneigt wird. Dabei nimmt die Tiefe der unterschnittenen Schicht an der Außenfläche des röhrenförmigen Rohlings 1 vom vorderen Ende der Schneidkante zu ihrem hinteren Ende hin zu. Auf diese Weise kreuzen sich die Ebenen der Rippen 5 und der Schraubenrillen 2, wodurch die Verwirbelung des Stroms des Arbeitsmittels verbessert wird, das mit den Rippen 5 des Rohrelements eines Wärmeaustauschers zusammenwirkt.

Außerdem werden durch das Kreuzen der Schraubenrillen 2 und der Schneidkante des Schneidwerkzeugs 4 die Bedingungen für das Unterschneiden der Querrippen 5 verbessert, wodurch eine minimale Breitenänderung der unterschnittenen Schicht (Schrumpf) und eine höhere Festigkeit zwischen den unterschnittenen Rippen 5 und dem Grundmetall des Rohrelements gewährleistet wird und als Folge/die wärmetechnischen Charakteristiken des Rohrelements mit Querrippen für einen Wärmeaustauscher verbessert.

## Industrielle Anwendbarkeit

Das Verfahren zur Herstellung eines Rohrelements mit Querrippen für einen Wärmeaustauscher kann in der elektronischen, elektrotechnischen, energetischen Industrie, im Kraftfahrzeug- und Traktorenbau, in der Kälte- und Heiztechnik zur Anwendung kommen.

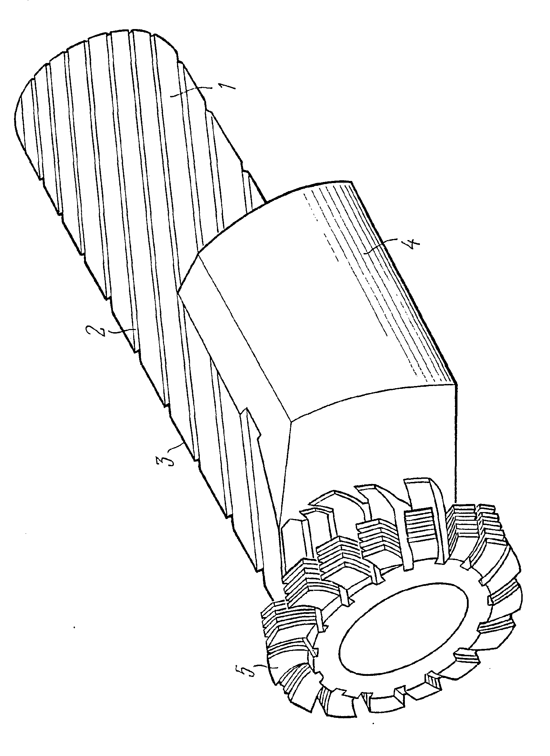

## PATENTANSPRUCH

Verfahren zur Herstellung eines Rohrelements mit Querrippen für einen Wärmeaustauscher, welches darin besteht, daß in einen röhrenförmigen Rohling (1) Rillen (2) unter Bildung von Vorsprüngen (3) geschnitten werden, dann der röhrenförmige Rohling (1) in Drehung versetzt wird und die an seiner Oberfläche befindliche Metallschicht mittels eines Schneidwerkzeugs (4) unterschnitten und gleichzeitig zur Bildung von Rippen (5) an dem röhrenförmigen Rohling (1) abgebogen wird, wobei die Schneidkante des Schneidwerkzeugs (4) schräg zur Achse des röhrenförmigen Rohlings (1) angestellt wird, dadurch gekennzeichnet, daß die Rillen (2) in den röhrenförmigen Rohling (1) entlang einer Schraubenlinie geschnitten werden und die Schneidkante des Schneidwerkzeugs (4) in die der Neigungsrichtung der Schraubenlinie der Rillen (2) entgegengesetzte Richtung geneigt wird.

**I. CLASSIFICATION OF SUBJECT MATTER** (If several classification symbols apply, indicate all) ⁶

According to International Patent Classification (IPC) or to both National Classification and IPC

IPC⁴      B 23 P 15/26

**II. FIELDS SEARCHED**

Minimum Documentation Searched ⁷

| Classification System | Classification Symbols |
|---|---|
| IPC⁴ | B 23 P 15/26, B 21 D 53/06 |

Documentation Searched other than Minimum Documentation
to the Extent that such Documents are Included in the Fields Searched ⁸

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| A | GB, B, 1097519 (Giorgio Palloni) 13 January 1965 (13.01.65), see claims | 1 |
| A | US, A, 3753364, (Q-dot Corporation), 21 August 1973 (21.08.73), see the abstract | 1 |
| A | US, A, 3496752 (Union Carbide Corporation) 24 February 1970 (24.02.70), see the abstract | 1 |

-----

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 14 December 1988 (14.12.88) | 22 December 1988 (22.12.88) |
| International Searching Authority | Signature of Authorized Officer |
| ISA/SU | |

Form PCT/ISA/210 (second sheet) (January 1985)